# EUROPÄISCHE PATENTSCHRIFT

(11) **EP 2 444 378 B1**
(45) Veröffentlichungstag und Bekanntmachung des Hinweises auf die Patenterteilung: **13.11.2013**
(21) Anmeldenummer: 11450116.6
(22) Anmeldetag: 08.09.2011
(51) Int. Cl.: C02F 3/28, C02F 3/00, G01F 23/00

(54) **Vorrinchtung und Verfahren zum Vermessen von Schlammpegeln in Schlammbehältern**
Apparatus and method for measuring sludge level in sludge containers
Appareil et procédé de mesure du niveau des boues dans des récipients à boues

(30) Priorität: 21.10.2010 AT 17482010
(43) Veröffentlichungstag der Anmeldung: 25.04.2012
(73) Patentinhaber: Umwelttauchservice Tauchpartner C. Ulrich GmbH, 1060 Wien (AT)
(72) Erfinder: Ulrich, Anton, 1060 Wien (AT)
(74) Vertreter: Rippel, Andreas

(56) Entgegenhaltungen:
- EP-A1- 1 816 449
- WO-A1-2006/133511
- DE-A1- 4 412 479
- DE-U1-202008 009 513
- US-A- 1 757 061
- US-A- 3 048 037
- US-A- 5 791 187
- US-A- 5 942 980
- ANONYMOUS: "Monitoring and control of deep bed thickener/Clarifiers", RESEARCH DISCLOSURE, MASON PUBLICATIONS, HAMPSHIRE, GB, Bd. 430, Nr. 33, 1. Februar 2000 (2000-02-01), XP007125495, ISSN: 0374-4353

## Beschreibung

Die Erfindung bezieht sich auf ein Verfahren zum Vermessen von Schlammablagerungen in Schlammbehältern, insbesondere Faultürmen unter Verwendung von Drucksensoren.

In der DE 44 12 479 A1 ist eine Vorrichtung zur Erfassung des Schlammpegels und der Schlammdichte in Behältern beschrieben, bei der ein an einem Seil hängender Drucksensor angeordnet ist. Beim Absenken des Drucksensors steigt die Dichte und daraus kann auf die Schlammmenge geschlossen werden.

In der US 3,048,037 A ist eine Messvorrichtung in Treibstoffbehältern und dgl. beschrieben. Dabei ist an einem Schwingarm ein Differentialdruckmesser angeordnet. Für das Messen von Schlammablagerungen ist diese Vorrichtung nicht brauchbar.

Schlammbehälter, insbesondere Faultürme, werden speziell in der Abwassertechnik zur kontrollierten und gesteuerten Durchführung anaerober Abbauprozesse eingesetzt. Je nach Dauer der Betriebszeiten bilden sich verhärtete Schlammablagerungen in verschiedenen Höhen. Diese waren bisher nur durch eine Taucherkontrolle abtastend sehr ungenau feststellbar. Für den Auftraggeber einer notwendigen Räumung waren demnach die Kosten nicht kontrollierbar.

Die Erfindung hat es sich zum Ziel gesetzt ein Verfahren zu schaffen, mit dem die Vermessung von Schlammablagerungen in Schlammbehältern, insbesondere Faultürmen, einfacher durchzuführen ist. Erreicht wird dies dadurch, dass ein der Länge nach mit Drucksensoren versehener Messarm am möglichst tiefsten Punkt der Schlammablagerung auf diese aufgelegt und erst der Ort der jeweiligen Auflagepunkte und dann der Wasserdruck an den jeweiligen Auflagepunkten gemessen wird,
- worauf diese Messungen in verschiedenen Höhen so oft durchgeführt werden bis der Messarm waagrecht am Altschlamm aufliegt und nur mehr vom äußersten Auflagepunkt ein Messergebnis erhältlich ist,
- worauf diese Messreihen über den Umfang der Schlammablagerung versetzt wiederholt werden.

Das erfindungsgemäße Verfahren ermöglicht eine relativ genaue Ermittlung der Schlammhöhen, über die das Volumen des abgelagerten Altschlammes berechnet werden kann. Daraus ergibt sich die Zeit für die Räumung des Altschlammes.

Eine Vorrichtung zur Durchführung des erfindungsgemäßen Verfahrens zeichnet sich aus durch einen der Länge nach mit Drucksensoren versehenen Messarm, der im Bereich seiner Enden mit je einem Seil od. dgl. verbunden ist.

Die Drucksensoren der erfindungsgemäßen Vorrichtung sind zweckmäßig mit einem Auswertgerät verbunden.

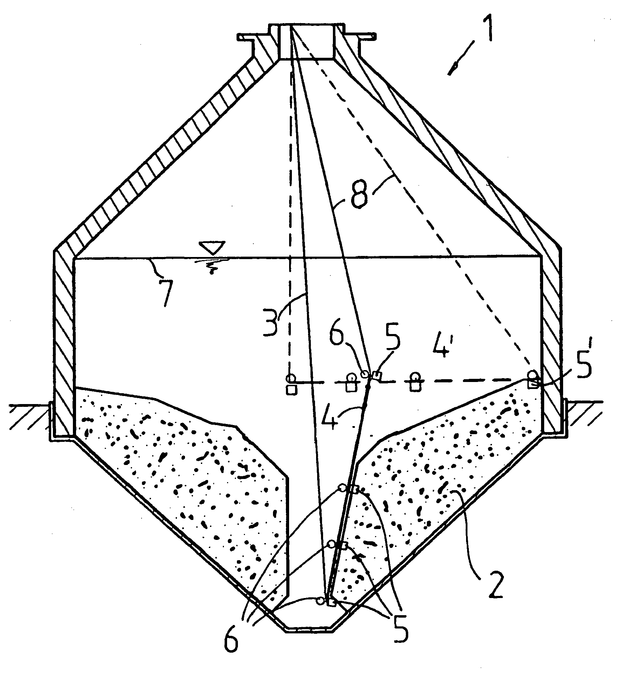

Nachstehend ist die Erfindung anhand eines in der Zeichnung dargestellten Ausführungsbeispieles näher beschrieben, ohne auf dieses Beispiel beschränkt zu sein. Dabei zeigt die einzige Figur einen Faulraum im Schnitt.

Gemäß der Zeichnung haben sich in einem Faulturm 1 verhärtete Schlammablagerungen 2 gebildet. Zur Vermessung dieser Ablagerung 2 wird mittels eines Seiles 3, zweckmäßig mit Hilfe eines nicht dargestellten Tauchers, ein am Seil 3 befestigter Messarm 4 bis zum möglichst tiefsten Punkt des Faulbehälters 1 bzw. der Schlammablagerungen 2 abgelassen.

Am Messarm 4 sind der Länge nach Drucksensoren 5 sowie Drucksensoren 6 montiert, welche Sensoren 5, 6 mit einem Auswertgerät, nicht dargestellt, verbunden sind.

Wenn die Drucksensoren 5 am Altschlamm aufliegen, lösen diese je nach Auflage ein oder mehrere Signale an einem nicht dargestellten Auswertgerät aus.

Danach wird die zweite Messebene aktiviert und über die Drucksensoren 6 der Wasserdruck bis zur Wasseroberfläche 7 gemessen.

Anschließend wird der Messarm 4 mittels des Seiles 3 je nach Höhe der Schlammablagerungen 2 angehoben und die Messvorgänge wiederholt.

Dies erfolgt so lange, bis der Messarm 4 waagrecht liegt, in der Zeichnung mit 4' bezeichnet, und nur mehr der äußerste Drucksensor 5' einen Messpunkt aktiv anzeigt.

Über das Hebeseil 8, das im Bereich des äußeren Endes des Messarmes 4 mit diesem verbunden ist, wird nun der Messarm 4 aufgeklappt und die oben beschriebenen Messreihen über den Umfang der Schlammablagerung 2 versetzt wiederholt. Wenn diese Messungen an mindestens vier Stellen, z.B., 0°, 90°, 180°, 270° durchgeführt werden, ist das Ergebnis eine relativ genaue Aufzeichnung der Schlammhöhe, über die das Volumen der Schlammablagerungen 2 berechnet werden kann.

Im Rahmen der Erfindung sind zahlreiche Abänderungen möglich, so können diese Messungen auch zur Kontrolle nach einer nassen Faulschlammräumung dienen.

## Patentansprüche

1. Verfahren zum Vermessen von Schlammablagerungen (2) in Schlammbehältern (1), insbesondere Faultürmenunter Verwendung von Drucksensoren, **dadurch gekennzeichnet, dass** ein der Länge nach mit Drucksensoren (5, 6) versehener Messarm (4) am möglichst tiefsten Punkt der Schlammablagerung (2) auf diese aufgelegt und erst der Ort der jeweiligen Auflagepunkte und dann der Wasserdruck an den jeweiligen Auflagepunkten gemessen wird,
- worauf diese Messungen in verschiedenen Höhen so oft durchgeführt werden bis der Messarm (4') waagrecht am Altschlamm aufliegt und nur mehr vom äußersten Auflagepunkt (5') ein Messergebnis erhältlich ist,
- worauf diese Messreihen über den Umfang der Schlammablagerung (2) versetzt wiederholt werden.

2. Vorrichtung zur Durchführung des Verfahrens nach Anspruch 1, **gekennzeichnet durch** einen der Länge nach mit Drucksensoren (5, 6) versehenen Messarm (4), der im Bereich seiner Enden mit je einem Seil (3, 8) od. dgl. verbunden ist.

3. Vorrichtung nach Anspruch 2, **dadurch gekennzeichnet, dass** die Drucksensoren (5, 6) mit einem Auswertgerät verbunden sind.

## Claims

1. A method for measuring sludge deposits (2) in sludge tanks (1), in particular digestion tanks, using pressure sensors, **characterised in that** a measuring arm (4) which is provided along its length with pressure sensors (5, 6) is placed onto the sludge deposit (2) at the deepest possible point of the latter, and first the location of the respective rest points and then the water pressure at the respective rest points is measured,
- whereupon these measurements are carried out at different heights until the measuring arm (4') rests horizontally on the waste sludge and a measurement result can only be obtained from the outermost rest point (5'),
- whereupon these series of measurements are repeated offset around the periphery of the sludge deposit (2).

2. A device for carrying out the method according to Claim 1, **characterised by** a measuring arm (4) which is provided along its length with pressure sensors (5, 6) and is connected in the region of each of its ends with a cable (3, 8) or the like.

3. The device according to Claim 2, **characterised in that** the pressure sensors (5, 6) are connected to an evaluation unit.

## Revendications

1. Procédé pour la mesure de dépôts de boue (2) dans des récipients à boue (1), en particulier des tours de putréfaction, en utilisant des capteurs de pression, **caractérisé en ce qu'**un bras de mesure (4) pourvu de capteurs de pression (5, 6) sur sa longueur est appuyé au point le plus bas du dépôt de boue (2), et **en ce que** la mesure est prise d'abord à l'emplacement de chacun des points d'appui, puis la pression d'eau est mesurée aux différents points d'appui,
- suite à quoi les mesures à différentes hauteurs sont répétées jusqu'à ce que le bras de mesure (4') s'appuie horizontalement sur la boue usagée et qu'un résultat de mesure ne puisse plus être obtenu qu'au point d'appui (5') situé le plus à l'extérieur,
- suite à quoi les séries de mesures sont répétées de façon décalée sur le pourtour du dépôt de boue (2).

2. Dispositif pour l'exécution du procédé selon la revendication 1, **caractérisé par** un bras de mesure (4) pourvu de capteurs de pression (5, 6) sur sa longueur et relié à un câble respectif (3, 8) ou autre dans la région de ses extrémités.

3. Dispositif selon la revendication 2, **caractérisé en ce que** les capteurs de pression (5, 6) sont reliés à un appareil d'évaluation.
